(19) Europäisches Patentamt
European Patent Office
Office européen des brevets

(11) **EP 4 197 672 A1**

(12) **DEMANDE DE BREVET EUROPEEN**

(43) Date de publication:
**21.06.2023 Bulletin 2023/25**

(21) Numéro de dépôt: **22213530.3**

(22) Date de dépôt: **14.12.2022**

(51) Classification Internationale des Brevets (IPC):
**B22F 5/10** (2006.01)     **B22F 7/08** (2006.01)
**B22F 10/28** (2021.01)     **B22F 10/20** (2021.01)
**B33Y 10/00** (2015.01)     **B33Y 80/00** (2015.01)
**G01D 11/24** (2006.01)     **G01L 9/00** (2006.01)

(52) Classification Coopérative des Brevets (CPC):
**B22F 10/20; B22F 5/10; B22F 7/08; B22F 10/28;
B33Y 10/00; B33Y 80/00; G01L 9/0079**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **17.12.2021 FR 2113909**

(71) Demandeur: **Commissariat à l'énergie atomique
et aux énergies alternatives
75015 Paris (FR)**

(72) Inventeurs:
• **POUILLE, Quentin
92160 Antony (FR)**

• **LADACI, Ayoub
75014 Paris (FR)**
• **LOMELLO, Fernando
91190 Gif-Sur-Yvette (FR)**
• **CHEYMOL, Guy
91440 Bures Sur Yvette (FR)**
• **MASKROT EL IDRISSI, Hicham
92160 Antony (FR)**

(74) Mandataire: **Brevalex
Tour Trinity
1 Bis Esplanade de La Défense
CS 60347
92035 Paris La Défense Cedex (FR)**

(54) **PROCÉDÉ D'INTÉGRATION D'UN CAPTEUR DANS UNE PIÈCE RÉALISÉE PAR FABRICATION ADDITIVE**

(57) L'invention concerne un procédé d'intégration d'un capteur dans une pièce métallique, comportant :
a) - la réalisation par impression additive d'une première partie (2) de la pièce, comportant un volume d'accueil (4) d'un capteur, ce volume ayant une largeur supérieure à celle du capteur;

b) - le dépôt du capteur dans ledit volume d'accueil ;
c) - la réalisation par impression additive d'une deuxième partie (6) de la pièce, recouvrant le capteur et la formation d'un bain de fusion dans le volume d'accueil (4), de part et d'autre du capteur.

[Fig. 1C]

Fig. 1C

**Description**

L'invention concerne le domaine de l'instrumentation avancée des pièces mécaniques, notamment issues de la fabrication additive, dans le but de faire du RT-SHM intégré (« Real Time Structural Health Monitoring », ou « surveillance en temps réel de l'état d'une structure »).

On cherche à instrumenter de telles pièces par intégration de capteurs, de préférence à fibre optique, durant une procédure d'impression. Ces capteurs vont permettre de mesurer au moins un paramètre tel que la température, ou la déformation, ou les contraintes, ou les vibrations ou encore une dose de radiation.

Dans un premier temps, cette intégration permettra le suivi en ligne des contraintes et/ou des températures appliquées sur les pièces mécaniques durant leur fabrication, pour le contrôle et l'optimisation du processus d'impression. Et, dans un second temps, elle permettra, durant l'utilisation de ces pièces en tant que pièces maitresses ou pièces auxiliaires, d'avoir un suivi de l'usure et des potentielles dégradations du système dans lequel elles sont intégrées. Cela permettra d'anticiper toute défaillance, d'améliorer la gestion et le remplacement de ces pièces ou d'autres composants du système et d'en créer une maintenance prédictive.

On connait à ce sujet les articles de A. Barrias et al., « A Review of Distributed Optical Fiber Sensors for Civil Engineering Applications », Sensors, vol. 16, no 5, 2016, doi: 10.3390/s1605074818, ou encore de D. D. Francesca et al., « Qualification and Calibration of Single-Mode Phosphosilicate Optical Fiber for Dosimetry at CERN », J. Lightwave Technol., vol. 37, n° 18, p. 4643-4649, sept. 2019.

Actuellement les capteurs utilisés sont situés à l'extérieur des pièces et sont soumis à des contraintes extérieures (environnement, chocs...). Mais ces capteurs ne peuvent mesurer que l'extérieur d'une pièce et non l'intérieur, et il est donc très difficile de connaître le comportement à l'intérieur d'une structure sans passer par des modèles d'approximation et d'extrapolation.

L'intégration d'un capteur, notamment à fibre optique, à l'intérieur d'un composant est possible par fabrication additive métallique, ce qui permet de s'affranchir des techniques classiques de mesure, car le capteur mesure ses propres valeurs physiques qui sont les mêmes que la pièce visée.

Une telle intégration d'un capteur permet aussi de le protéger de l'environnement de fonctionnement de la pièce dans laquelle il se trouve et de réduire le volume engendré par des capteurs surfaciques conventionnels.

Cependant, l'intégration de capteurs par fabrication additive est très complexe. Une technique d'intégration connue est décrite dans le document de Stoll, P. et al. intitulé: "Embedding fibre optical sensors into SLM parts', in: 27th Annual International Solid Freeform Fabrication Symposium, pp. 1815-1825 (2016). Mais les contraintes de l'impression dégradent fortement le capteur et conduisent souvent à sa destruction. D'autres solutions connues consistent à protéger des capteurs à fibre (comme des réseaux de Bragg) par des couches denses de matériaux comme le Chrome/Nickel ; voir à ce sujet, notamment, l'article de Dirk Haverman et al., intitulé : "Embedding optical fibers into stainless steel using laser additive manufacturing", ICALEO 2013, 381 (2013); doi: 10.2351/1.5062904.

Ces solutions connues sont complexes, leur mise en œuvre a un coût élevé, et elles impliquent un grand isolement du capteur (fibre) par rapport à l'environnement de mesure ; elles introduisent ainsi des erreurs de mesure considérables.

Un problème qui se pose donc est de trouver un capteur capable de résister à un procédé de fabrication additive (haute température, contrainte mécanique, haute densité laser...) et/ou de minimiser sa dégradation afin d'obtenir des bonnes performances de mesure durant et après l'intégration.

Un autre problème est l'optimisation des paramètres d'un procédé d'intégration d'un tel capteur ; particulier, si une technique d'impression additive est mise en œuvre, il convient de trouver les paramètres tels que la vitesse et la stratégie de balayage, et/ou la puissance du laser, et/ou les paramètres concernant la géométrie d'intégration, c'est - à - dire la forme de la pièce dans laquelle la fibre va venir se positionner avant l'intégration (demi-cercle, rectangle...).

Encore un autre problème réside dans le choix, l'adaptation et l'optimisation d'un capteur et de la technique de mesure correspondante (choix des matériaux, choix du capteur, principe physique de la mesure ...).

Encore un autre problème est de trouver un procédé de réalisation qui soit rapide : les techniques connues sont longues, il faut par exemple au moins 24h pour réaliser le dépôt de nickel autour de la fibre mise en œuvre dans la technique décrite dans l'article de P.Stoll et al. mentionné ci-dessus.

**EXPOSÉ DE L'INVENTION**

L'invention vise à résoudre tout ou partie de ces problèmes.

Elle concerne d'abord un procédé d'intégration d'un capteur dans une pièce métallique, comportant :

　　a) - la réalisation par impression additive, d'une première partie de la pièce métallique, comportant un volume d'accueil d'un capteur, ce volume ayant une largeur supérieure à celle du capteur ;
　　b) - le dépôt du capteur dans ledit volume d'accueil ;

c) - la réalisation par impression additive d'une deuxième partie de la pièce métallique, recouvrant le capteur et la formation d'un bain de fusion dans le volume d'accueil, de part et d'autre du capteur ou d'un tube métallique du capteur ou contenant le capteur.

L'impression additive de la deuxième partie de la pièce, recouvrant le capteur, conduit à la formation du bain de fusion de part et d'autre du capteur.

De préférence, le métal du bain de fusion permet, en refroidissant, d'accrocher le capteur aux parois du volume d'accueil.

En refroidissant, le métal du bain de fusion va venir s'accrocher d'une part sur le capteur et d'autre part sur les bords du volume d'accueil, par exemple les bords des couches qui font face au capteur. La liaison ainsi formée s'étend de manière continue le long du capteur selon la direction d'extension de celui-ci ainsi que, de préférence, en hauteur.

Le capteur peut être ou comporter par exemple un capteur optique, comportant par exemple une cavité Fabry-Pérot, ou un réseau de Bragg, ou une fibre optique, par exemple pour la mesure de la température et/ou des contraintes et/ou d'une dose de radiation, par exemple par réflectométrie, et/ou un capteur de température et/ou un capteur chimique à base de fibre optique pour la mesure des gaz, et/ou du PH, et/ou de la corrosion. Le capteur peut également être ou comporter un capteur à fibre optique basée sur la diffusion Rayleigh ou Raman. Par exemple il comporte une fibre optique et éventuellement un miroir dans un tube.

Une fibre optique peut être revêtue d'un revêtement, par exemple en Al ou Au ou Cu, d'épaisseur inférieure à 20 $\mu$m.

L'impression additive peut être réalisée en balayant la surface d'un lit de poudre, comportant le volume d'accueil. L'impression additive peut être réalisé par fusion laser sur lit de poudre, ou fusion laser de fil ou projection de poudre sur laser (technique dite « DED ») ou par impression additive par faisceau d'électrons, ou par DED (« Directed Energy Déposition », ou « dépôt sous énergie concentrée »).

Par exemple, un laser balaye la surface des couches successives d'un lit de poudre.

Le volume d'accueil peut avoir une forme convexe, il a par exemple la forme d'un canal dans lequel le capteur peut être déposé.

L'impression additive peut mettre en œuvre, lors de l'étape c) :

- le dépôt de couches de poudre métallique balayées par un laser, de manière perpendiculaire à une direction d'extension du capteur ;
- au moins un balayage, par faisceau laser, de la surface de la première couche qui recouvre le capteur et selon une direction parallèle à direction d'extension de celui-ci.

Un procédé selon l'invention peut comporter en outre la réalisation d'un creux sous l'endroit où le capteur doit être positionné et l'ajout d'une feuille de brasure dans ce creux. Cette feuille de brasure permettra de lier le capteur au fond de la cavité.

Le capteur peut comporter un élément sensible à une déformation, ou à une variation de température ou à une contrainte ou à des vibrations ou à une dose de radiation, cet élément sensible étant disposé à l'intérieur d'un tube métallique. Un procédé selon l'invention peut comporter une ou plusieurs étapes préalables de formation ou de réalisation du capteur, par exemple dans un tube. Par exemple, avant l'étape b), le capteur peut être formé par l'introduction ou la formation dans le tube, d'un élément ou d'un senseur, sensible à une déformation, ou à une variation de température ou à une contrainte ou à des vibrations ou à une dose de radiation. Plus spécifiquement, la formation d'un capteur dans le tube peut comporter :

- l'introduction d'une tige métallique dans le tube ;
- l'introduction d'une fibre optique dont une extrémité fait face à une extrémité de la tige, à distance ($L_c$) de celle-ci, ces deux extrémités définissant une cavité Fabry-Pérot.

La tige métallique peut être fixée dans le tube, par exemple par soudure. La fibre optique peut être fixée dans le tube, par exemple par collage.

Dans un procédé ou un dispositif selon l'invention, la pièce métallique peut être par exemple en acier ou en un alliage de titane, par exemple du Ti64, ou en Cu, ou en Nb, ou en Cr, ou en W.

L'invention concerne également un dispositif intégré comportant un capteur dans une pièce métallique, comportant :

- un canal contenant ledit capteur ;
- une masse homogène du matériau de la pièce entourant ledit capteur à et à laquelle celui-ci est fixé.

Le capteur de dispositif intégré selon l'invention est directement entouré du matériau dont au moins un paramètre (par exemple : déformation et/ou température...) est à mesurer. Autrement dit, il n'y a pas un épais gainage intermédiaire entre le capteur lui-même et l'environnement à mesurer.

Selon une réalisation, le capteur comporte une cavité Fabry-Pérot et/ou un capteur de température ou un réseau de Bragg, ou capteur, par exemple une fibre optique, pour la mesure de la température et/ou des contraintes et/ou d'une dose de radiation, par exemple par réflectométrie, et/ou un capteur chimique à base de fibre optique pour la mesure des gaz, et/ou du PH, et/ou de la corrosion. Le capteur peut également être un capteur à fibre optique basé sur la diffusion Rayleigh ou Raman.

Pour un capteur comportant une cavité Fabry-Pérot, celle-ci peut être formée entre une extrémité d'une tige métallique et une extrémité d'une fibre optique.

## BRÈVE DESCRIPTION DES DESSINS

[Fig. 1A] - [Fig. 1E] représentent une réalisation d'un procédé selon l'invention ;
[Fig. 2] représente l'évolution de la pénétration thermique dans une poudre métallique en fonction du temps d'exposition de celle-ci à un laser ;
[Fig. 3A] représente la stratégie de balayage par laser dans le cadre d'un procédé selon invention ;
[Fig. 3B] est une vue agrandie d'une partie de la figure 3A ;
[Fig. 3C] représente une étape de passage du laser parallèlement au tube contenant le capteur, en vue de dessus ;
[Fig. 4] représente une réalisation d'un exemple de capteur pour une mise en œuvre dans le cadre de l'invention ;
[Fig. 5A] - [Fig. 5B] représentent respectivement une vue en coupe d'une intégration d'un capteur, mettant en œuvre un procédé selon invention (figure 5A) et d'un essai d'intégration avec un procédé connu (figure 5B) ;
[Fig. 6] représente une éprouvette munie d'un capteur Fabry Pérot.
[Fig. 7] représente l'évolution de la déformation d'un capteur Fabry-Pérot, en montée et en descente, lors de la déformation d'une éprouvette de traction réalisée selon l'invention ;
[Fig. 8] représente une mesure optique de la longueur Lc ;
[Fig. 9] représente une éprouvette instrumentée dans une machine de traction.

## EXPOSÉ DÉTAILLÉ DE MODES DE RÉALISATION PARTICULIERS

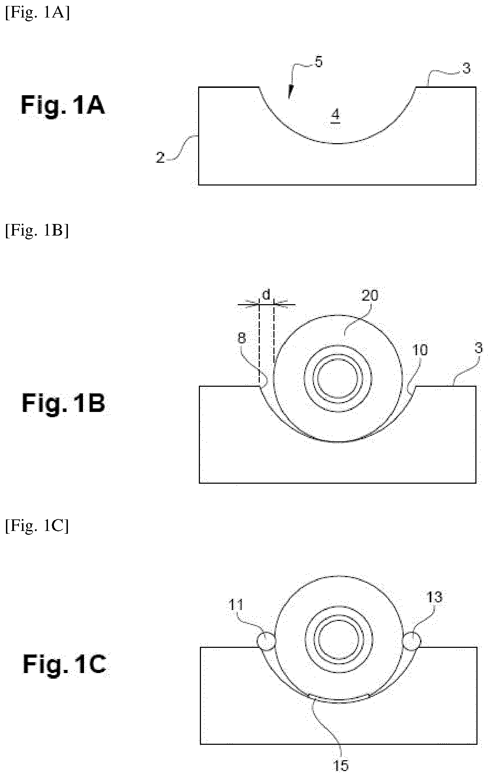

Des étapes d'un mode de réalisation d'un procédé selon l'invention sont illustrées en figures 1A-1E, en vue d'intégrer ou d'incorporer un tube métallique contenant un capteur dans une pièce ou une partie métallique (ici : de l'acier ; mais on peut aussi mettre en œuvre Ti64 (alliage de titane, d'aluminium et de vanadium), ou du Cu, ou du Nb, ou du Cr, ou du W ou tout métal pouvant être utilisé pour une fabrication additive).

Un procédé selon l'invention peut mettre en œuvre la technique d'impression additive par fusion sur lit de poudre. Selon cette technique, le matériau sélectionné pour réaliser une pièce ou une partie métallique est déposé couche par couche, par exemple par une ou plusieurs buses contrôlées par ordinateur. Le matériau de chaque couche peut être mis en fusion par un faisceau laser ; d'autres techniques peuvent être utilisées pour réaliser l'étape de fusion dans le cadre de la présente invention, par exemple la technique de fabrication additive par faisceau d'électrons (EBM, ou « Electron Beam Melting »), ou par DED (« Directed Energy Déposition », ou « dépôt sous énergie concentrée »).). Chaque couche peut avoir par exemple une épaisseur comprise entre quelques micromètres et quelques dizaines de micromètres, par exemple comprise entre 10 $\mu m$ et 500$\mu m$, cette épaisseur étant fonction du procédé, de la poudre et de la machine mis en œuvre. La pièce ou la partie métallique peut avoir été préalablement conçue par une technique de conception assistée par ordinateur (CAO). Des éléments complémentaires concernant cette technique d'impression additive par fusion sur lit de poudre peuvent être trouvés par exemple dans le document de N. Shahrubudina et al.: "An Overview on 3D Printing Technology: Technological, Materials, Applications", 2nd International Conférence on Sustainable Materials Processing and Manufacturing (SMPM 2019), Procedia Manufacturing 35 (2019) 1286-1296, et dans les documents cités dans cet article.

Pour calculer la pénétration thermique $\delta$ de la chaleur apportée par le faisceau laser sur une couche on peut utiliser la formule suivante (tirée de l'ouvrage de R. Poprawe, Tailored light 2 : Laser Application Technology. Heidelberg, Springer, 2011), dans laquelle $\alpha_{316}L \cdot$ est le coefficient de diffusion thermique de l'acier choisi et t le temps :
[Math 1]

$$\delta = \sqrt{4 * \alpha_{316L} * t} \qquad\qquad (EQ\ 1)$$

Cette formule est généralisable à d'autres métaux, en remplaçant le coefficient $\alpha_{316}L\cdot$ par le coefficient de diffusion thermique du matériau concerné.

Pour l'exemple d'application envisagée, une pénétration thermique de 60 $\mu$m est souhaitée, valeur qui correspond à 2 fois l'épaisseur de la couche de poudre qui sera déposée, ceci afin de garantir une bonne densité de la matière. De plus, d'une manière générale, une pénétration thermique qui correspond à 2 fois l'épaisseur de la couche de poudre déposée permet de ne pas endommager le capteur lorsque celui-ci est recouvert par le matériau de la pièce (voir la réalisation de la 2$^e$ partie, ou partie haute, de la pièce, comme expliqué plus loin).

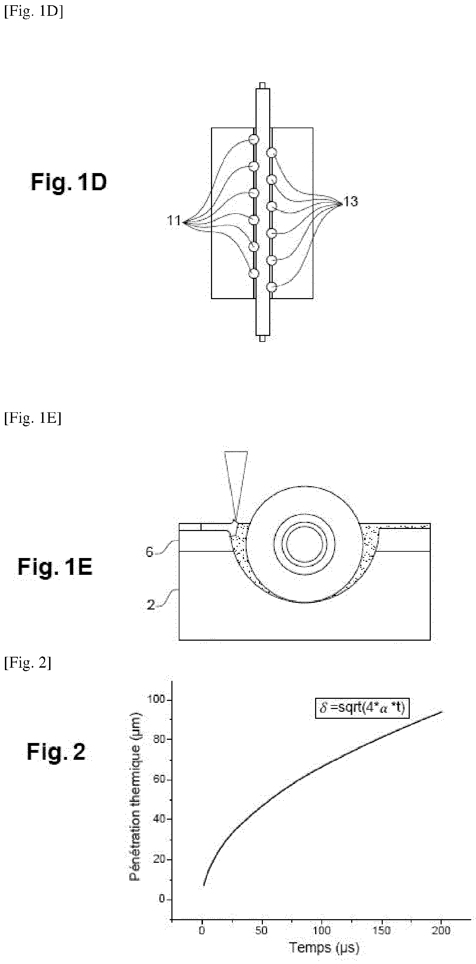

L'évolution de la pénétration thermique $\delta$ en fonction du temps t d'exposition au laser (selon la formule EQ1 ci-dessus) est représentée en figure 2. Le temps d'exposition permet de définir la vitesse de passage du laser. Dans l'exemple choisi, pour une pénétration thermique de 60 $\mu$m, le temps d'exposition est de 82 $\mu$s. Ce temps d'exposition permet de définir la vitesse du laser.

Selon la technique mise en œuvre dans le cadre de la présente invention, le capteur comportant ici un élément sensible dans un tube métallique:

- on réalise (figure 1A) par impression additive, une I$^{ère}$ partie 2, dite partie basse, de la pièce, comportant un volume d'accueil 4 (un canal dans l'exemple illustré) comportant une ouverture supérieure 5 permettant d'accueillir un tube métallique 20 (figure 1B, sur laquelle on voit le capteur positionné dans la cavité 4), tout en laissant un espace entre chaque côté du tube et la matière déposée par impression additive, afin de former un bain de fusion comme expliqué ci-dessous. Le volume 4 définit donc une concavité dans la partie 2 de la pièce et a lui-même une forme convexe ; il peut avoir, en coupe perpendiculaire à sa direction d'extension longitudinale, la forme d'une portion de cylindre ou d'une ellipse ;

- on introduit (figure 1B) le capteur dans ce volume d'accueil 4 le ; une distance ou un jeu d est maintenu entre la surface extérieure du tube et les bords 8, 10 du volume d'accueil 4, en fait les bords des couches de poudre; ce jeu est de préférence choisi pour correspondre à la largeur du bain de fusion (voir plus loin); il peut être par exemple de 50 $\mu$m de chaque côté du tube métallique ; de préférence, ce jeu tient compte des tolérances géométriques de la machine utilisée, qui est dans cet exemple une machine Trumpf TruPrint 1000. Puis on fixe le tube par soudure laser en quelques points 11, 13 le long de ce tube (voir figure 1C et figure 1D, cette dernière étant une vue de dessus); comme on le voit en figure 1B et en figure 1C, le tube dépasse au-dessus du niveau défini par la surface supérieure 3 de la 1$^{ère}$ partie 2 ;

- on réalise (figure 1E) ensuite, par impression additive, une 2$^{ème}$ partie 6, dite partie haute, de la pièce. Sur les couches déposées, le laser est balayé de manière perpendiculaire au tube métallique 20 : l'arrêt du laser à la certaine distance définie par le jeu latéral entre le tube et les bords 8, 10 du volume d'accueil 4 permet à la matière en fusion de couler dans ce dernier, ce qui conduit à la formation d'un bain de fusion de part et d'autre du tube métallique 20; en refroidissant, le métal du bain de fusion va venir s'accrocher d'une part sur le tube métallique et d'autre part sur les bords 8, 10 du volume d'accueil, plus précisément les bords des couches qui font face au tube 20. La liaison ainsi formée s'étend de manière continue le long du tube selon la direction d'extension de celui-ci ainsi qu'en hauteur. Le bain de fusion est généré après positionnement de la fibre dans le volume 4 et résulte de l'interaction entre le laser et la poudre métallique lorsqu'on réalise la partie haute.

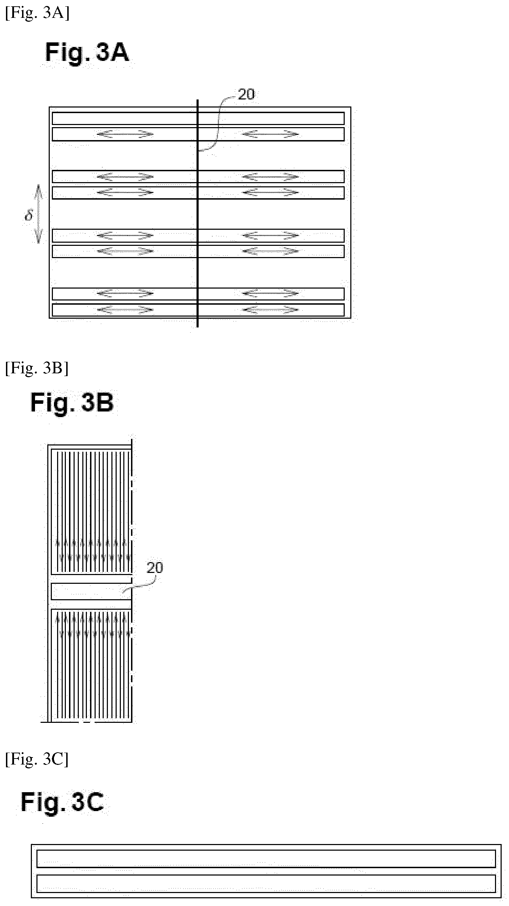

Les mouvements du faisceau laser sur les différentes couches de la partie haute ou supérieure sont schématisés en figure 3A et Figure 3B, qui sont les vues de dessus de la pièce qui contient le tube 20, la figure 3B étant une vue détaillée d'une partie de la figure 3A :

- dans un premier temps, le faisceau laser balaye la matière selon un trajet perpendiculaire, et de préférence uniquement perpendiculaire, à la direction d'extension du tube 20 (figures 3A et 3B) ; ces balayages vont permettre, lorsque le laser arrive à proximité des bords 8, 10, de former le bain liquide, comme expliqué ci-dessus. Un balayage qui n'est pas perpendiculaire à la fibre entraîne un échauffement trop important de celle-ci et elle devient malléable : le capteur n'est plus utilisable ;

- le faisceau laser est guidé de manière parallèle au tube 20 sur la première couche de l'impression qui vient recouvrir le tube (figure 3C) ; ce passage parallèle (en fait : un unique passage parallèle) permet de consolider la liaison entre le tube et la pièce.

La figure 3A illustre également la possibilité de plusieurs capteurs simultanément. Ici 4 capteurs sont représentés, mais leur nombre N peut être quelconque (N=1 ou N >1).

Il est possible d'optimiser la technique décrite ci-dessus pour assurer une meilleure liaison entre le tube 20 et la pièce ; en particulier, on peut ainsi réaliser un creux sous le capteur, dans lequel on peut introduire une feuille 15 de brasure (voir figure 1C) ; l'ensemble, incluant cette feuille, peut-être passé au four, par exemple à environ 700° C, pour faire fondre la feuille et réaliser une liaison entre la pièce et le tube.

A titre d'exemple, les paramètres retenus pour une mise en œuvre de l'invention sur de l'acier 316L sont les suivants (paramètres pouvant être modifiés en fonction des matériaux et/ou des machines utilisés ; dans cet exemple, laser est un laser ytterbium fibré de longueur d'onde 1064 nm) :

Puissance = 80 W ;
Vitesse de déplacement du laser en surface des couches = 642 mm.s$^{-1}$;
Espacement entre zones voisines de balayage du faisceau laser $\delta$ = 70 $\mu$m ;
Hauteur de chaque couche de poudre = 30 $\mu$m ;
Taille du spot laser = 30 $\mu$m.

On décrit maintenant la réalisation d'un capteur pouvant être utilisé dans le cadre de l'invention : il s'agit dans cet exemple d'un capteur Fabry-Pérot miniaturisé, qui permet de mesurer les contraintes mécaniques appliquées à la pièce dans laquelle le capteur est disposé. Ce type de capteur est fiable, précis et robuste ; (d'autres capteurs, peuvent - être utilisés, des exemples de ces autres capteurs sont donnés ci-dessus et dans la présente demande ; parmi eux : un réseau de Bragg, ou une fibre optique pour la mesure de température, et/ou des contraintes et/ou d'une dose d'irradiation (mesure par réflectométrie), et/ou un capteur de température et/ou un capteur chimique à base de fibre optique pour la mesure des gaz, et/ou du PH, et/ou de la corrosion...

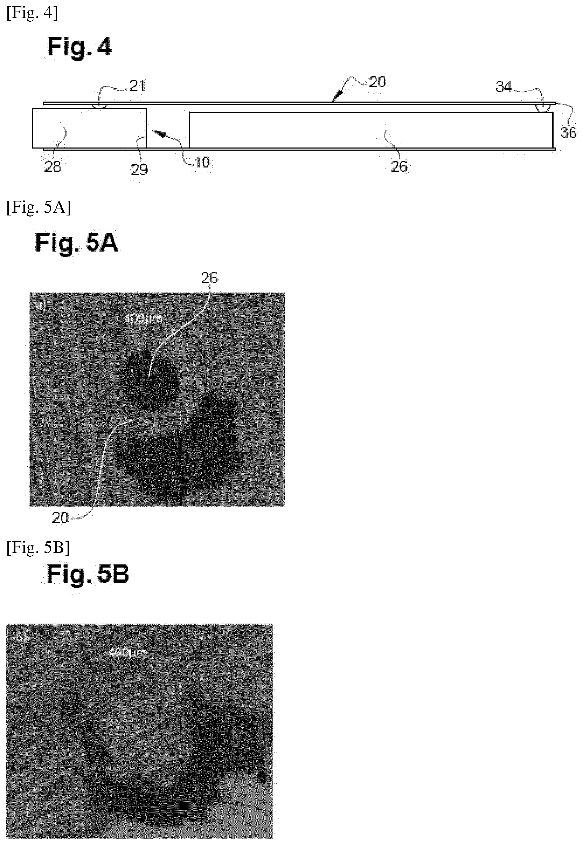

Pour ce faire, on choisit un tube métallique 20 (figure 4), par exemple en inox 316L, dont le diamètre intérieur D va permettre d'accueillir d'une part une tige métallique 24 et d'autre part une fibre optique 26. C'est ce tube 20 qui sera ensuite positionné comme illustré en figure 1B.

Ce tube 20 est par exemple en acier inox, par exemple encore 316L (par exemple : fournisseur UNIMED) ; il peut avoir être de dimensions 200$\mu$m (diamètre intérieur)/400$\mu$m (diamètre extérieur), mais d'autres dimensions peuvent être utilisées, par exemple entre 80 $\mu$m et 1 mm pour le diamètre intérieur et entre 200 $\mu$m et 10 mm pour le diamètre extérieur. Il a une longueur de quelques dizaines de mm, par exemple 50 mm ; il peut être alésé, puis poli sur ses faces extérieures, pour faciliter sa manipulation. La tige 28 utilisée est métallique, par exemple en acier, par exemple encore un acier 316L (fournisseur GoodFellow), de longueur Lt (par exemple Lt = 1 mm); une extrémité 29 de cette tige peut être polie, par exemple avec des papiers 30$\mu$m, 16 $\mu$m, 9 $\mu$m , 3$\mu$m, 1 $\mu$m puis 0.3 $\mu$m afin d'avoir une face plane 10 qui permettra la réflexion de la lumière.

Cette tige 28 peut être positionnée et fixée dans le tube 20, par exemple par soudure (la référence 21 désigne un point de soudure). La soudure 21 est réalisée à l'intérieur du tube grâce à une soudeuse laser (par exemple : laser en impulsion de longueur d'onde environ 1 $\mu$m, U =234V, t (durée de l'impulsion) = 1.0ms, f (fréquence de répétition de l'impulsion) = 1Hz : on dirige le faisceau laser sur le tube, ce qui fait fondre ce dernier localement et permet de le lier à la tige intérieure). Une fois cette étape réalisée, une fibre optique, par exemple de diamètre 125 $\mu$m, avec un revêtement, par exemple en aluminium (fournisseur IXblue/Fiber Guide) ou en or ou en cuivre peut être positionnée dans le tube face à la tige métallique (Figure 4), à une distance Lc de celle-ci ; ce revêtement, d'épaisseur inférieure à 20 $\mu$m, permet une tenue à la température. On notera la différence entre ce revêtement fin, dont toute fibre optique est munie, et la couche très épaisse de nickel dont doit être munie la fibre dans le document de P.Stoll et al. déjà cité ci-dessus : le dépôt de cette couche très épaisse nécessitait des opérations supplémentaires, qui sont très minutieuses et qui sont chronophages (la réalisation d'une couche de 200 $\mu$m de nickel, comme décrit dans ce document, nécessite environ 2 jours ; la réalisation d'un capteur selon l'invention nécessite environ 3h). La fibre peut ensuite être fixée, par exemple avec de la colle céramique 34, à une extrémité 36 du tube 20. Des franges d'interférométrie pourront donc être formées, qui permettront de mesurer la distance Lc et de remonter à la déformation de la pièce à laquelle le tube 20 est fixé.

Le capteur miniature ainsi réalisé a comme propriété de ne pas dégrader les propriétés mécaniques d'une pièce métallique en acier, d'une part grâce à sa composition chimique (316L), mais également grâce à sa faible taille, puisque le diamètre extérieur du tube 20 sera en général <1 mm.

Pour illustrer la faisabilité de la technique selon l'invention, une pièce intégrant un tube 20 contenant un capteur de type Fabry-Pérot a été réalisé, d'une part par un procédé selon l'invention (figure 5A) et d'autre part par un procédé basé sur des techniques connues. On voit en figure 5A, qui est une section de la pièce perpendiculairement à la direction d'extension de la fibre optique 26, que le capteur est bien intégré dans la pièce ; on ne voit pas sur cette figure ni le tube 20 (on l'a représenté en traits interrompus autour de la fibre 26), ni les couches déposées par impression 3D parce que l'intégration de l'ensemble est quasiment parfaite ; par contre, l'intégration avec la méthode connue est un échec, comme on le voit en figure 5B, qui met en évidence une destruction du tube métallique et de la fibre qu'il contient (sur chacune de ces 2 figures, les traces noires dans la partie inférieure correspondent à un espace sous la fibre (la fabrication additive procède par le dessus).

Les résultats des figures 5A et 5B montrent la robustesse et la fiabilité de l'invention pour l'intégration d'un capteur, ici un capteur optique Fabry-Pérot. Le procédé selon l'invention permet d'obtenir une parfaite intégration du capteur dans la pièce, sans avoir à munir préalablement la fibre d'une épaisse couche de nickel.

On peut d'ailleurs noter ici quelques différences entre la présente invention et la technique décrite dans le document de P.Stoll et al. déjà cité ci-dessus :

- dans ce document, une épaisse couche de nickel est ajoutée autour de la fibre. Une telle couche épaisse n'est pas nécessaire ni mise en œuvre dans le cadre de la présente invention ;
- la technique qui est décrite dans le document de P.Stoll et al. met en œuvre un balayage du laser selon un trajet qui est en alternance perpendiculaire et parallèle aux fils ; or, comme déjà expliqué ci-dessus, un trajet non perpendiculaire conduit à un échauffement trop important de la fibre (d'où le besoin, dans cet article, d'une épaisse couche de nickel autour de la fibre).

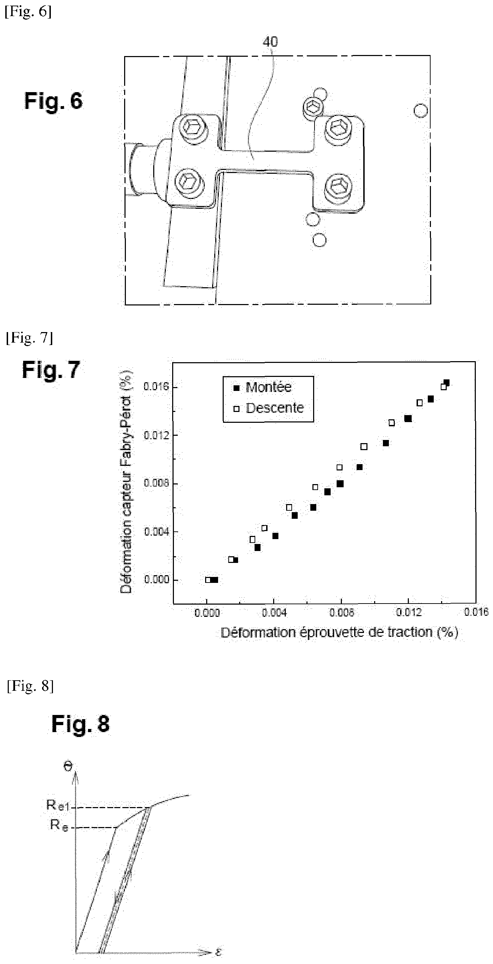

La présente invention ne met pas en œuvre un revêtement épais, dont la réalisation est très chronophage, autour de la fibre, et elle met en œuvre des balayages perpendiculaires à la fibre, ce qui permet d'obtenir une intégration parfaite de la fibre dans la pièce finale. L'invention permet de réaliser plusieurs capteurs simultanément, comme on le comprend par exemple de la figure 3A, et ce en un temps beaucoup plus court que selon la technique décrite dans le document de Stoll et al. déjà cité ci-dessus (technique qui nécessité au moins 24h pour réaliser uniquement la fibre, qui doit ensuite être intégrée). Grâce au procédé selon l'invention, une éprouvette 40 instrumentée par capteur Fabry-Pérot a été réalisée (Figure 6). Cette éprouvette permet de démontrer qu'il est possible de mesurer la déformation d'une structure de manière précise (déformation mesurée par le capteur depuis l'intérieur de la pièce).

La longueur Lc (c'est la longueur de la cavité Fabry-Pérot, voir la figure 4) diminue ou augmente en fonction de la force appliquée pour tirer la pièce ; en mesurant le déplacement Lc, on peut donc savoir si la structure reste dans le domaine élastique et donc dans son bon mode de fonctionnement. Lorsqu'un effort est appliqué sur la pièce pour la déformer, on peut observer que Le augmente ; quand on arrête cet effort, Lc revient à sa longueur d'origine (Figure 7). L'écart que l'on peut constater en figure 7 entre les données relatives à la montée et les données relatives à la descente s'explique par la loi d'écrouissage (représentée en figure 8) : une fois que le matériau du tube est déformé, sa relaxation entraîne une diminution de la charge et la déformation n'est pas la même que lorsque l'on tire sur le matériau (phénomène de relaxation).

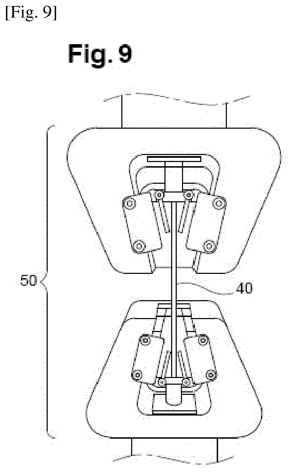

Le dispositif expérimental utilisé est montré Figure 9 : il comporte l'éprouvette de traction instrumentée avec le capteur Fabry Pérot, un spectromètre (non représenté sur la figure) pour l'analyse du signal en provenance du capteur ainsi qu'une machine de traction 50.

On constate que le capteur Fabry-Pérot situé à l'intérieur de l'éprouvette instrumentée 40 va donner la même déformation que l'éprouvette de traction (mesure réalisée sur la machine de traction). De plus la mesure ayant été effectué dans le domaine élastique, le capteur revient à sa valeur nominale, à savoir ici une déformation de 0%.

Cette mesure permet donc de vérifier la fiabilité du capteur (avec un retour à la longueur d'origine une fois l'effort arrêté), sa robustesse (la mesure est possible après intégration du capteur dans une pièce métallique), ainsi que sa précision (mesure précise avec résolution théorique de $\pm\ 0.1\mu m$).

Le capteur Fabry Pérot utilisé ici permet de mesurer les déformations mécaniques de la pièce dues à la machine de traction ; mais ces déformations pourraient aussi être dues, par exemple, à des variations de température.

L'invention trouve à s'appliquer au domaine spatial ou aéronautique, dans le domaine nucléaire ou encore dans le domaine automobile. En mettant en œuvre l'invention, un capteur peut être inséré dans une pièce, réalisée en fabrication additive, utilisée dans l'un quelconque de ces domaines pour mesurer des variations de dimension lorsque cette pièce est soumise à diverses contraintes.

L'invention présente divers avantages :

- un signal optique d'une fibre optique est non dégradé par la technique d'impression additive ;
- la technique selon l'invention peut être adaptée à tout type d'objet que l'on voudrait réaliser par fabrication additive métallique ;
- elle permet, grâce au capteur intégré selon l'invention, de mesurer une pièce dans laquelle celui-ci est intégré.

## Revendications

1. Procédé d'intégration d'un capteur dans une pièce métallique, comportant :

   a) - la réalisation par impression additive d'une première partie (2) de la pièce, comportant un volume d'accueil (4) d'un capteur, ce volume ayant une largeur supérieure à celle du capteur;
   b) - le dépôt dudit capteur dans ledit volume d'accueil ;
   c) - la réalisation par impression additive d'une deuxième partie (6) de la pièce, recouvrant le capteur et conduisant à la formation d'un bain de fusion dans le volume d'accueil (4), de part et d'autre du capteur.

**2.** Procédé selon la revendication 1, le capteur étant un capteur optique, par exemple une cavité Fabry-Perrot, ou un capteur de température ou un réseau de Bragg, ou une fibre optique pour la mesure de température, et/ou de contrainte et/ou de dose d'irradiation par réflectométrie, ou un capteur chimique à base de fibre optique pour la mesure des gaz, et/ou du PH, et/ou de la corrosion

**3.** Procédé selon l'une des revendications 1 ou 2, l'impression additive étant réalisée par fusion laser sur lit de poudre, ou par fusion laser de fil ou par projection de poudre sur laser ou par impression additive par faisceau d'électrons, ou par DED (« Directed Energy Déposition » ou « dépôt sous énergie concentrée »).

**4.** Procédé selon l'une des revendications 1 à 3, l'impression additive étant réalisée en balayant la surface d'un lit de poudre, comportant le volume d'accueil (4).

**5.** Procédé selon l'une des revendications 1 à 4, le volume d'accueil (4) ayant une forme convexe.

**6.** Procédé selon l'une des revendications 1 à 5, l'impression additive mettant en œuvre, lors de l'étape c) :

- des couches de poudre métallique balayées par un laser, de manière perpendiculaire à une direction d'extension du capteur (20) ;
- et/ou au moins un balayage, par faisceau laser, de la surface de la première couche qui recouvre le capteur et selon une direction parallèle à une direction d'extension de celui-ci.

**7.** Procédé selon l'une des revendications 1 à 6, comportant en outre la réalisation d'un creux, sous l'endroit où le capteur doit être positionné, et l'ajout d'une feuille de brasure (15) dans ce creux.

**8.** Procédé selon l'une des revendications 1 à 7, le capteur comportant un élément sensible à une déformation, ou à une variation de température ou à une contrainte ou à des vibrations ou à une dose de radiation, cet élément sensible étant disposé à l'intérieur d'un tube métallique (20).

**9.** Procédé selon la revendication 8, la formation du capteur dans le tube comportant :

- l'introduction d'une tige métallique (28) dans le tube (20);
- l'introduction d'une fibre optique (26) dont une extrémité fait face à une extrémité de la tige, à distance ($L_c$) de celle-ci, ces deux extrémités définissant une cavité Fabry-Pérot.

**10.** Procédé selon la revendication 9, la tige métallique (28) étant fixée dans le tube (20), par exemple par soudure (21) et/ou la fibre optique (26) étant fixée dans le tube (20), par exemple par collage (24).

**11.** Procédé selon l'une des revendications 1 à 10, la pièce métallique étant en acier ou en un alliage de titane, par exemple du Ti64, ou en Cu, ou en Nb, ou en Cr, ou en W.

**12.** Dispositif intégré comportant un capteur dans une pièce métallique, comportant :

- un canal (4) contenant ledit capteur ;
- une masse homogène du matériau de la pièce métallique entourant ledit capteur et à laquelle celui-ci est fixé.

**13.** Dispositif selon la revendication 12, le capteur comportant une cavité Fabry-Perrot ou un réseau de Bragg, ou une fibre optique pour la mesure de température, et/ou de contraintes et/ou d'une dose de radiation par réflectométrie, et/ou un capteur de température ou un capteur chimique à base de fibre optique pour la mesure des gaz, du PH, de la corrosion.

**14.** Dispositif selon l'une des revendications 12 ou 13, le capteur comportant une cavité Fabry-Pérot, formée entre une extrémité d'une tige métallique (28) et une extrémité d'une fibre optique (26).

**15.** Dispositif selon l'une des revendications 12 à 14, le matériau de la pièce métallique étant en acier ou en un alliage de titane, par exemple du Ti64, ou en Cu, ou en Nb, ou en Cr, ou en W.

[Fig. 1A]

**Fig. 1A**

[Fig. 1B]

**Fig. 1B**

[Fig. 1C]

**Fig. 1C**

[Fig. 1D]

**Fig. 1D**

11

13

[Fig. 1E]

**Fig. 1E**

6

2

[Fig. 2]

**Fig. 2**

$\delta = sqrt(4*\alpha*t)$

Pénétration thermique (µm)

Temps (µs)

[Fig. 3A]

# Fig. 3A

[Fig. 3B]

# Fig. 3B

[Fig. 3C]

# Fig. 3C

[Fig. 4]

## Fig. 4

[Fig. 5A]

## Fig. 5A

[Fig. 5B]

## Fig. 5B

[Fig. 6]

**Fig. 6**

40

[Fig. 7]

**Fig. 7**

[Fig. 8]

**Fig. 8**

[Fig. 9]

**Fig. 9**

Europäisches
Patentamt

European
Patent Office

Office européen
des brevets

# RAPPORT DE RECHERCHE EUROPEENNE

Numéro de la demande

EP 22 21 3530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | Philipp Stoll ET AL: "Embedding fibre optical sensors into SLM parts", , 12 août 2015 (2015-08-12), XP055439408, Extrait de l'Internet: URL:https://sffsymposium.engr.utexas.edu/sites/default/files/2016/146-Stoll.pdf [extrait le 2018-01-10] | 1-6,8, 11-13,15 | INV. B22F5/10 B22F7/08 B22F10/28 B22F10/20 B33Y10/00 B33Y80/00 G01D11/24 G01L9/00 |
| Y | * section "Experimental Procedure" * * figures 1-6 * * tableau 1 * ----- | 7,9,10, 14 | |
| Y | MATHEW JINESH ET AL: "Integrating Fiber Fabry-Perot Cavity Sensor Into 3-D Printed Metal Components for Extreme High-Temperature Monitoring Applications", IEEE SENSORS JOURNAL, IEEE, USA, vol. 17, no. 13, 1 juillet 2017 (2017-07-01), pages 4107-4114, XP011652511, ISSN: 1530-437X, DOI: 10.1109/JSEN.2017.2703085 [extrait le 2017-06-10] * section II * * figures 6-8 * ----- | 7 | |
| Y | US 2005/231729 A1 (LOPUSHANSKY RICHARD L [US] ET AL) 20 octobre 2005 (2005-10-20) * alinéas [0001], [0015], [0016], [0041] * * figures 2, 6 * ----- -/-- | 9,10,14 | DOMAINES TECHNIQUES RECHERCHES (IPC) B22F B33Y G01D G01L B29C G01B G01H |

Le présent rapport a été établi pour toutes les revendications

| Lieu de la recherche | Date d'achèvement de la recherche | Examinateur |
|---|---|---|
| La Haye | 17 avril 2023 | Järvi, Tommi |

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 22 21 3530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MATHEW JINESH ET AL: "SS316 structure fabricated by selective laser melting and integrated with strain isolated optical fiber high temperature sensor", PROCEEDINGS OF SPIE, IEEE, US, vol. 9634, 28 septembre 2015 (2015-09-28), pages 96340Q-96340Q, XP060057170, DOI: 10.1117/12.2194451 ISBN: 978-1-62841-730-2 * section 2 * ----- | 6 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 17 avril 2023 | Järvi, Tommi |

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 22 21 3530

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-04-2023

| Document brevet cité au rapport de recherche | Date de publication | Membre(s) de la famille de brevet(s) | Date de publication |
|---|---|---|---|
| US 2005231729 A1 | 20-10-2005 | EP 1586867 A2 | 19-10-2005 |
| | | US 2005231729 A1 | 20-10-2005 |
| | | US 2009225325 A1 | 10-09-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. BARRIAS et al.** A Review of Distributed Optical Fiber Sensors for Civil Engineering Applications. *Sensors,* 2016, vol. 16 (5
- **D. D. FRANCESCA et al.** Qualification and Calibration of Single-Mode Phosphosilicate Optical Fiber for Dosimetry at CERN. *J. Lightwave Technol.,* Septembre 2019, vol. 37 (18), 4643-4649
- **STOLL, P. et al.** Embedding fibre optical sensors into SLM parts. *27th Annual International Solid Freeform Fabrication Symposium,* 2016, 1815-1825
- **DE DIRK HAVERMAN et al.** Embedding optical fibers into stainless steel using laser additive manufacturing. *ICALEO,* 2013, vol. 381
- **N. SHAHRUBUDINA et al.** An Overview on 3D Printing Technology: Technological, Materials, Applications. *2nd International Conférence on Sustainable Materials Processing and Manufacturing (SMPM 2019), Procedia Manufacturing,* 2019, vol. 35, 1286-1296
- **R. POPRAWE.** Tailored light 2 : Laser Application Technology. Springer, 2011